# EUROPEAN PATENT SPECIFICATION

(11) **EP 1 955 502 B1**
(45) Date of publication and mention of the grant of the patent: **26.02.2014**
(21) Application number: 07816916.6
(22) Date of filing: 17.09.2007
(51) Int. Cl.: H04L 12/851

(54) **SYSTEM FOR PROVIDING BOTH TRADITIONAL AND TRAFFIC ENGINEERING ENABLED SERVICES**
SYSTEM ZUR BEREITSTELLUNG VON SOWOHL DURCH HERKÖMMLICHE ALS AUCH DURCH VERKEHRSBEDINGTE TECHNIK ERMÖGLICHTE DIENSTE
SYSTÈME POUR FOURNIR DES SERVICES À LA FOIS TRADITIONNELS ET ACTIVÉS PAR INGÉNIERIE DE TRAFIC

(30) Priority: 15.11.2006 US 866010 P; 10.01.2007 US 884377 P; 27.03.2007 US 691557
(43) Date of publication of application: 13.08.2008
(73) Proprietor: Huawei Technologies Co., Ltd., Longgang District, Shenzhen Guangdong 518129 (CN)
(72) Inventor: DUNBAR, Linda, Plano, TX 75025 (US); SULTAN, Robert, Somers, NY 10589 (US); YONG, Lucy, Tulsa, Oklahoma 74137 (US)
(74) Representative: Thun, Clemens
(86) International application number: PCT/CN2007/070710
(87) International publication number: WO 2008/058478

(56) References cited:
- EP-A- 0 854 613
- WO-A1-00/38376
- WO-A1-00/77990
- CN-A- 1 731 767
- ALFARO F J ET AL: "A strategy to compute the InfiniBand arbitration tables" PARALLEL AND DISTRIBUTED PROCESSING SYMPOSIUM., PROCEEDINGS INTERNATIO NAL, IPDPS 2002, ABSTRACTS AND CD-ROM FT. LAUDERDALE, FL, USA 15-19 APRIL 2002, LOS ALAMITOS, CA, USA,IEEE COMPUT. SOC, US, 15 April 2002 (2002-04-15), pages 43-48, XP010591014 ISBN: 978-0-7695-1573-1
- ALFARO F J ET AL: "Performance evaluation of VBR traffic in InfiniBand" IEEE CANADIAN CONFERENCE ON ELECTRICAL AND COMPUTER ENGINEERING. CCECE 2002. WINNIPEG, MANITOBA, CANADA, MAY 12 - 15, 2002; [CANADIAN CONFERENCE ON ELECTRICAL AND COMPUTER ENGINEERING], NEW YORK, NY : IEEE, US, vol. 3, 12 May 2002 (2002-05-12), pages 1532-1537, XP010707497 ISBN: 978-0-7803-7514-7

## Description

### Field of the Technology

The present invention relates to communication technologies, and more particularly, to network switches and a network component.

### Background of the Invention

Modem communication and data networks include nodes that transport data through the network. The nodes may include routers, switches, and/or bridges that transport the individual data frames or packets through the network. Data services, referred to as traditional data services throughout this disclosure, may be offered by a network forwarding data frames or packets from one node to another node across the network without using pre-configured routes or bandwidth reservation on intermediate nodes. Other networks may forward the data frames or packets from one node to another node across the network along pre-configured routes with each node along the route reserving bandwidth, which is referred to as traffic engineered (TE) data services throughout this disclosure. Mixed networks which transport traditional data services and TE data services are described in International Publication Number WO 2005/099183 by Friskney et al., entitled "Differential Forwarding in Address-Based Carrier Networks," and the Institute of Electrical and Electronic Engineers (IEEE) Proposed Project Authorization for Provider Backbone Bridged Network - Traffic Engineering, both of which are incorporated herein by reference as if reproduced in their entirety.

One method for an Ethernet network to offer both TE data services and traditional data services is by virtual local area network (VLAN) partitioning. In the mixed network, one set of VLANs may be used for traditional Ethernet data services and another set of VLANs may be used for TE Ethernet data services. However, service providers are likely to gradually add TE data services to existing traditional data services where the existing data services have already been identified by VLAN identifiers (IDs). For networks that have existing data services, these services may already have a pre-defined priority. To ensure a high priority for the TE data services in the mixed network, changes may need to be made to the existing data services themselves and/or the priority of the existing data services.

In the mixed switching network described above, because data frames are transported according to the VLANs, a single physical port may communicate data frames from both existing VLANs and VLANs added for the TE data services. One of the features desired for TE data services is to enable communication with a pre-determined bandwidth based on available capacity along pre-determined routes. Some traditional data services dynamically route traffic in accordance with the rapid spanning tree protocol (RSTP) or multiple spanning tree protocol (MSTP), which results in communication with a non-deterministic use of bandwidth. The term "deterministic," as used herein, is defined as the quality or state of being fixed beforehand. When a single physical port communicates data frames of a VLAN for traditional data services and a VLAN added for the TE data services, then the available capacity on the single physical port is variable based on the non-deterministic use of bandwidth by the traditional data services. This non-deterministic use of bandwidth on the single physical port eliminates the ability to deterministically assign a pre-defined bandwidth along a pre-determined route.

Some related documents are cited as following: ALFARO F J ET AL " A strategy to compute the InfiniBand arbitration tables" which is published on 15 April 2002. ALFARO F J ET AL " Performance evaluation of VBR traffic in InfiniBand" which is published on 12 May 2002.

EP 0854613 discloses a network switch including a plurality of first network ports, a plurality of second network ports, a first bus, a second bus and a bridge interface coupled between the first and second buses. The first ports receive and transmit network data according to a first network protocol and the second ports receive and transmit network data according to a second network protocol. The first and second buses operate according to different bus standards. The bridge interface enables data transfer between the first and second buses and thus between the networks operating at different protocols. The switch includes a switch manager that controls the flow of network data and a processor for performing supervisory and control functions. The bridge interface includes receive buffers and transmit buffers assigned to respective ports. During packet data transfer operations across the first bus, the bridge interface emulates a first network port. During packet data transfer operations across the second bus, the bridge interface primarily acts as a slave to the second network ports by storing control lists for execution by the second network ports. This processor is relieved of performing necessary overhead functions associated with the second bus and is thus freed to perform other important switch functions.

### Summary of the Invention

In one embodiment, the disclosure includes a network switch (302, 402, 502) adapted for switching traffic for traffic engineered, TE, data services and for traditional data services, wherein the switch (302, 402, 502) further includes a first ingress port configured to only receive a first type of traffic, a second ingress port configured to only receive a second type of traffic, a first egress port configured to communicate only the first type of traffic, and a second egress port configured to communicate only the second type of traffic;
wherein the first type of traffic is TE traffic, and the second type of traffic is traditional traffic.

In another embodiment, the disclosure includes a method in a network switch (302, 402, 502) for switching traffic for traffic engineered, TE, data services and for traditional data services, the method includes partitioning a plurality of traffic into traffic of a first type and traffic of a second type, dedicating a first ingress port and a first egress port of the switch for communicating the first type of traffic, dedicating a second egress port and a second egress port of the switch for communicating the second type of traffic, and;
wherein the first type of traffic is TE traffic and the second type of traffic is traditional traffic.

These and other features will be more clearly understood from the following detailed description taken in conjunction with the accompanying drawings and claims.

### Brief Description of the Drawings

For a more complete understanding of this disclosure, reference is now made to the following brief description, taken in connection with the accompanying drawings and detailed description, wherein like reference numerals represent like parts.
FIG. 1 is a framework of one embodiment of a mixed communications network.
FIG. 2 is a framework of one embodiment of an Ethernet frame.
FIG. 3 is a framework of one embodiment of a hybrid switch.
FIG. 4 is a framework of another embodiment of a hybrid switch.
FIG. 5 is a framework of another embodiment of a hybrid switch.
FIG. 6A is one embodiment of a method for processing a frame at a node with hybrid switching capability.
FIG. 6B is another embodiment of a method for processing a frame at a node with hybrid switching capability.
FIG. 7 is one embodiment of a method for communicating a path trace message in the mixed communications network.
FIG. 8 is a framework of one embodiment of a general-purpose network component.

### Detailed Description of the Invention

It should be understood at the outset that although an illustrative implementation of one or more embodiments are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims along with their full scope of equivalents.

Disclosed herein is a mixed network that uses hybrid switching technology to offer both traffic engineered (TE) data services and traditional data services. TE data services are provided along node-to-node pre-configured paths spanning two or more nodes within the network. Each of the two or more nodes along the pre-configured paths is allocated a pre-determined amount of bandwidth, thereby providing guaranteed performance along the pre-configured paths. To deterministically guarantee the bandwidth for the pre-configured paths and to enable migration from an existing network with little or no impact to existing data services, traffic for TE data services is segregated from traffic for traditional data services, for example, using the disclosed hybrid switching technology.

Traffic for TE data services and traditional data services arc segregated by switching the traffic for TE data services on different physical or logical ports than the traffic for traditional data services. When traffic is segregated on different physical ports, a port designated for TE data services will transparently communicate with other ports designated for TE data services without communicating with or affecting ports designated for traditional data services, and vice versa. In addition, because a physical port has a capacity based on its construction, the total capacity available for TE data services on the port is constant, and the guaranteed bandwidth may be deterministically allocated to the TE data services based on the available capacity. Further, segregating traffic on different physical ports ensures that ports designated for TE data services will not carry un-expected traffic, which may reduce the likelihood that congestion will occur when all data paths going through the port are configured according to the ports physical capacity.

Logical ports are created by dividing a total capacity available on a single physical port among two or more logical ports. Each logical port may be assigned to switch either traditional data services or TE data services, and the bandwidth used on each logical port may be strictly enforced. Therefore, even when a single physical port is shared for switching both traditional data services and TE data services, the TE data services may determine to utilize the bandwidth based on the pre-allocated capacity of their logical port.

Segregating traffic for TE data services and traditional data services on different physical or logical ports also enables easier management of the pre-configured paths used by TE data services. Path trace messages may be communicated along the pre-configured paths to identify nodes that are misprovisioned or identify other pre-configured path errors. The path trace message may identify nodes provisioned for a pre-configured path that do not receive the path trace message, as well as identify nodes that are not provisioned for a pre-configured path and does receive the path trace message. Using the path trace message may provide a simple solution for identifying misprovisioned nodes, whereas differentiating services based on VLANs may lead to traffic leakage that may cause unknown network behavior and may be difficult to detect. Further, the path trace message is switched along its pre-configured path and is not broadcasted across the entire network as existing operations, administration, and management (OAM) messages, such as the connectivity check message (CCM), are used in some traditional data services.

To differentiate traffic as traffic for traditional data services or traffic for TE data services in logically divided ports, different values may be assigned to the type field in the frames of each type of traffic. Differentiating the different types of traffic with the type field enables a physical port that is divided into two or more logical ports to identify the type of traffic for enforcing the bandwidth constraints associated with each logical port without affecting VLAN addresses used for existing data services. Using the two-byte type field also enables a network node to differentiate the type of traffic faster than differentiating traffic based on the six bytes of the address, without impacting existing switching processes. In other embodiments, fields other than the type field may be used. Moreover, the use of the type field may be unnecessary when dealing with physically divided ports.

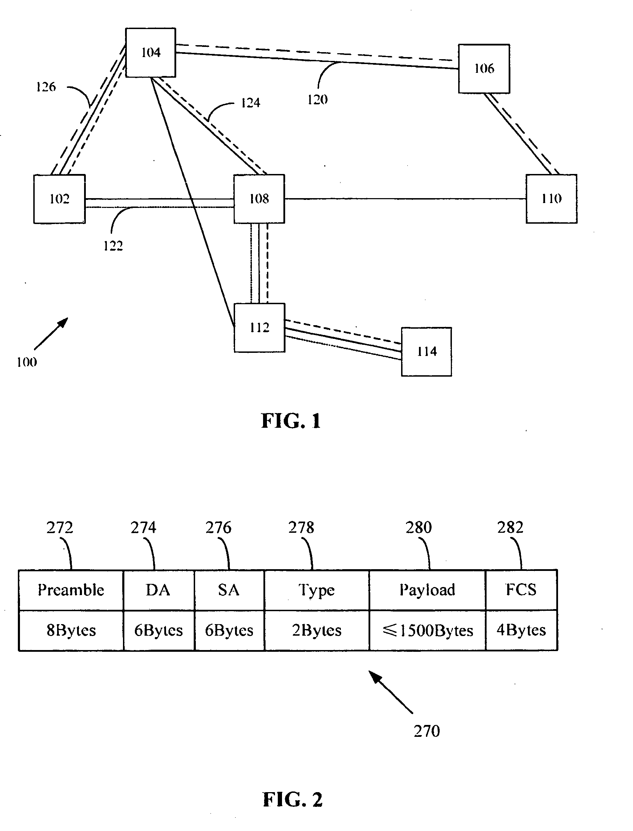

FIG. 1 illustrates one embodiment of a communications network 100. The network 100 comprises a plurality of nodes 102, 104, 106, 108, 110, 112, 114 (102-114). The nodes 102-114 exchange traffic with one another via a plurality of links 120. A plurality of connections 122, 124, 126 transport traffic between specific nodes 102-114 within the network 100. Each of these components is described in further detail below.

The network 100 may be any type of network 100 that transports frames from a source to a destination. Specifically, the network 100 may be a hybrid switching network that offers frames for both traditional data services and TE data services. The network 100 may be a backbone network, a provider network, or an access network running any one of a variety of protocols. Suitable protocols include Ethernet, Internet Protocol (IP), and Asynchronous Transfer Mode (ATM), among others. In a specific embodiment, the network 100 is a packet-switched backbone network running the Ethernet protocol.

The nodes 102-114 may be any device that transports frames through the network 100. For example, the nodes 102-114 may include bridges, switches, routers, or various combinations of such devices. Such devices typically contain a plurality of ingress ports for receiving frames from other nodes 102-114, logic circuitry to determine which nodes 102-114 to send the frames to, and a plurality of egress ports for transmitting frames to the other nodes 102-114. In an embodiment, the nodes 102-114 make the determinations needed to transport the frames through the network at any of the Open System Interconnection (OSI) layers. In a specific embodiment, the nodes 102-114 make the determinations needed to transport the frames through the network at the OSI layer two levels. The nodes 102-114 may include Backbone Edge Bridges (BEBs), Backbone Core Bridges (BCBs), Provider Edge Bridges (PEBs), Provider Core Bridges (PCBs), or various combinations of such devices. Edge bridges may be connected to nodes within two different networks, such as a provider network and a backbone network, while core bridges are typically connected to other nodes within the same network. For example, if the network 100 is a backbone network, then the nodes 102, 110, 114 may be BEBs, while the nodes 104, 106, 108, 112 may be BCBs.

The nodes 102-114 within the network 100 may communicate with each other via a plurality of links 120. The links 120 may be electrical, optical, wireless, or any other type of communications links 120. While it is contemplated that every node 102-114 within the network 100 may be connected to every other node 102-114 within the network 100, it is more common to have each of the nodes 102-114 connected to only some of the other nodes 102-1 14 within the network 100, as shown in FIG. 1. Such a configuration reduces the number of the links 120 between the various nodes 102-114. In the case where the nodes 102-114 are geographically separated from each other, the reduced number of links 120 significantly decreases the complexity and the cost of the network 100.

In an embodiment, the nodes 102-114 within the network 100 may be organized into one or more VLANs. Related application Attorney Docket Number 06FW031 (4194-02901), titled "Method of Preventing Transport Leaks in Hybrid Switching Networks," which is incorporated herein by reference as if reproduced in its entirety, discloses communicating frames with the nodes 102-114 organized into one or more VLANs.

The network 100 may also contain at least one connection 122, 124, 126. A connection 122, 124, 126 may be a point-to-point pre-configured path along two or more nodes 102-114 within the network 100. For example, the connection 122 is a point-to-point pre-configured path along nodes 102, 108, 112, and 114, the connection 124 is a point-to-point pre-configured path along nodes 102, 104, 108, 112, and 114, and the connection 126 is a point-to-point pre-configured path along nodes 102, 104, 106, and 110. Frames traveling through the connection 122, 124, 126 may be forwarded from one node to the next node along the connection 122, 124, 126 with minimal processing at each node 102-114. Generally, the ends of the connection 122, 124, 126 terminate at two edge nodes within the network 100, however it is contemplated that one or both of the ends of the connection 122, 124, 126 may terminate at a core node. Alternatively, the connection 122, 124, 126 may extend across multiple networks, such as from a first customer edge in a first provider network, through a backbone network, and to a second customer edge in a second provider network. In an embodiment, the connection 122, 124, 126 may be allocated bandwidth based on available capacity so that data services provided over the connection 122, 124, 126 may be guaranteed performance for the allocated bandwidth. Such data services are herein referred to as TE data services, and frames transported using the TE data services are herein referred to as TE frames. The connection 122, 124, 126 is sometimes referred to as provider backbone transport (PBT) path.

To establish a connection 122, 124, 126, the route is first selected. The route selection may be based on the topology of network 100 and bandwidth availability at each network segment. The route selection may be performed offline or online. When the route selection is performed offline, a management plane (not shown) may use a planning tool to select the route. When the route selection is performed online, a control plane (not shown) may select the route. Once the route is selected, the forwarding tables in each of the nodes 102-114 along the route may be provisioned by either the management plane or the control plane. For example, each of the nodes 102, 108, 112, and 114 are provisioned for the connection 122. When the management plane provisions the route, a provisioning command is sent to each of the nodes 102-114 along the route from an ingress point to the network 100 to an egress point from the network 100. The provisioning command may instruct the nodes 102-114 to insert a forwarding address into a forwarding database (FDB) (not shown). When the control plane provisions the route, a signaling protocol may be used to establish the route from an ingress point to the network 100 to an egress point from the network 100.

A frame may be any unit of data that is transported from a source to a destination. Specific examples of frames include Ethernet frames, IP packets, ATM cells, and any similar data structures. FIG. 2 is an example of an Ethernet frame 270 and may comprise the following fields: a preamble 272, a destination address 274, a source address 276, a type 278, a payload 280, and a frame check sequence 282. Briefly, the preamble 272 identifies the start of the frame, the destination address 274 indicates where the frame is going, the source address 276 indicates where the frame originated, the payload 280 is the data that the frame is carrying, and the frame check sequence 282 is used to verify the integrity of the frame. The type field 278 defines the type of service, e.g. a traditional bridged or switched service, herein referred to as traditional data services, or TE data services. The uses of the type field 278 are discussed in more detail below.

In an embodiment, traffic for traditional data services and TE data services is segregated by physical or logical ports. Segregating traffic by ports based on the type of service enables an existing network to be migrated gradually into hybrid switching network without the undesirable impacts created by segregating data services based on VLANs as described above.

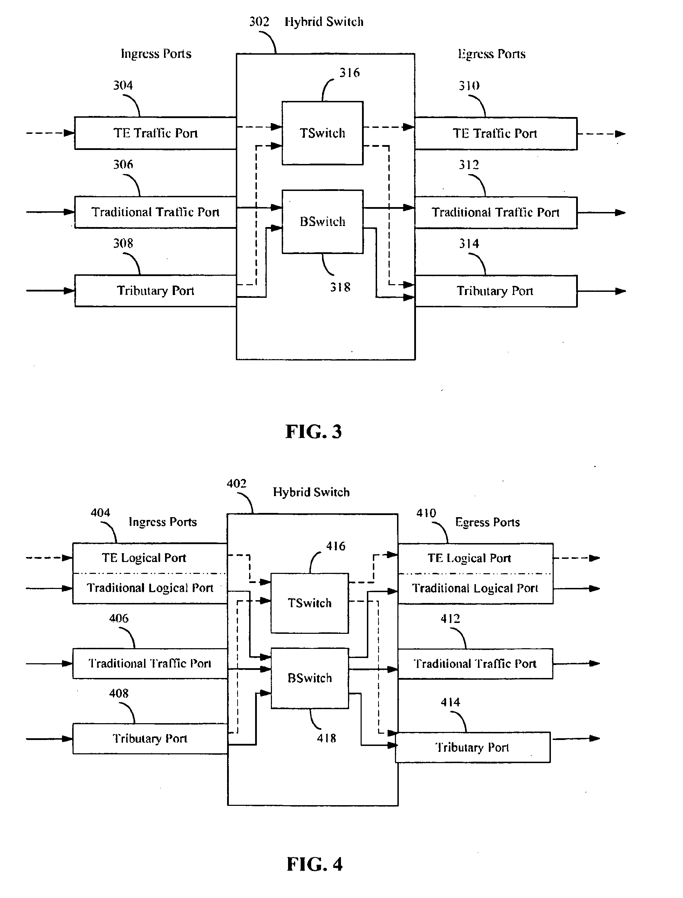

FIG. 3 illustrates an embodiment of a hybrid switch 302 that may be used at one of nodes 102-114 to segregate and communicate traffic for traditional data services and traffic for TE data services on different physical ports. As shown in FIG. 3, the solid lines indicate traffic for traditional data services, or traditional traffic, and the dashed lines indicate traffic for TE data services, or TE traffic. The hybrid switch 302 includes three types of ingress ports 304, 306, and 308 (304-308) for receiving traffic. The ingress ports 304 and 306 are line ports for receiving frames from nodes 102-114 within the network 100. The ingress port 308 may be a tributary port for receiving frames or data from devices or other networks connected to edge nodes in the network 100. The hybrid switch 302 also includes three types of egress ports 310, 312, and 314 (310-314) for transmitting frames. The egress ports 310 and 312 are line ports for transmitting frames to nodes 102-114 within the network 100. The egress port 312 may be a tributary port for transmitting frames or data to devices or other networks connected to edge nodes in the network 100. The hybrid switch 302 switches or bridges traffic from ingress ports 304-308 to egress ports 310-314 using TSwitch 316 or BSwitch 318. A detailed discussion of the operation of the hybrid switch 302 follows.

The hybrid switch 302 includes the ingress port 304 that is provisioned for receiving TE traffic. The ingress port 304 may only receive TE traffic from the egress ports 310 on another hybrid switch 302. In addition, the ingress port 304 may only receive TE traffic provisioned in the connection 122, 124, 126. For example, if node 106 is configured with the hybrid switch 302, the ingress port 304 may only receive TE traffic transmitted along the connection 126 from the egress port 310 of the hybrid switch 302 on node 104 or node 110. The ingress port 304 may drop any frames received that are for traditional traffic or TE frames for another of the connections 122 or 124. For example, if node 106 receives a TE frame for connection 124, then the frame may be dropped. Upon receiving TE traffic that is properly provisioned, such as node 106 receiving TE traffic communicated along connection 126, the ingress port 304 forwards the frame to the TSwitch 316 for switching.

The hybrid switch 302 includes the ingress port 306 that is provisioned for receiving traditional traffic. Similar to the ingress port 304, the ingress port 306 may only receive traditional frames from another node 102-114 with the egress port 312 provisioned for transmitting traditional traffic. For example, if node 108 is configured with the hybrid switch 302, the ingress port 306 may only receive traditional frames communicated from any of nodes 102, 104, 110, or 112. The ingress port 306 may drop any TE frames that are received. For example, if node 108 receives a TE frame, then the frame may be dropped. Upon receiving traditional traffic, the ingress port 306 forwards the frame to the BSwitch 318 for switching or bridging in accordance with traditional switching or bridging protocols. In a specific embodiment, the BSwitch 318 may switch or bridge the frame in accordance with IEEE 802.1Q, IEEE 802.1 ad, and/or IEEE 802.1 ah.

As an alternative to dropping the frames, the ingress ports 304 or 306 may raise an alarm indicating that non-provisioned traffic has been received on the port. The alarm may include information such as the source address of the received frame and the type of frame so that a network administrator may quickly identify and correct any improper provisioning of the nodes 102-114.

The hybrid switch 302 includes an ingress tributary port 308 for receiving data or frames from customer devices or other networks connected to edge nodes in the network 100. The ingress tributary port 308 may receive data and reassign a new value of the type field 278 to indicate that the data is either traditional traffic or TE traffic. Upon being configured as either traditional traffic or TE traffic, the frame is forwarded to the corresponding switch 316 or 318. Because the ingress tributary port 308 is for receiving traffic from customers or other networks, the hybrid switch 302 at core nodes in the network 100, such as node 108, may not have an ingress tributary port 308.

In an embodiment, there may be an ingress tributary port 308 for traditional traffic and an ingress tributary port 308 for TE traffic. Frames received on the ingress tributary port 308 assigned to TE traffic may have their type field 278 automatically changed to indicate that the frame is a TE frame. Further, the frame may be configured to cross-connect to one of the connection 122, 124, 126 based on the destination address in the header. For example, if node 102 receives a frame on the ingress tributary port 308 assigned to TE traffic and the destination address in the header is for node 110, then the frame may be automatically configured to cross-connect to connection 126. In this way, a customer device may have greater control to dynamically change the traffic that is communicated over the connection 122, 124, 126 by dynamically changing which ingress port 304, 306, 308, the traffic is sent on.

The hybrid switch 302 includes two switch engines, the TSwitch 316 and the BSwitch 318. The TSwitch 316 is responsible for processing all TE traffic and any related control and management frames for TE traffic. The BSwitch 318 is responsible for processing all traditional traffic and the related control and management frames for traditional traffic. The TSwitch 316 and the BSwitch 318 route their respective traffic from ingress ports 304-308 to egress ports 310-314. The structure and functionality of the BSwitch 318 may comply with traditional switching structure and functionality. In a specific embodiment, the structure and functionality of the BSwitch 318 may comply with IEEE 802.1 Q, IEEE 802.1ad, and/or IEEE 802.1ah, each of which is incorporated by reference herein. The structure of the TSwitch 316 may be the same as the BSwitch 318, but in some embodiments, the structure of the TSwitch 316 is not the same as the BSwitch 318. The functionality of the TSwitch 316 is discussed in detail below.

The TSwitch 316 may receive TE traffic from both of ingress port 304 and ingress tributary port 308. The TSwitch 316 may use a forwarding table to switch TE frames to the appropriate egress port 310 or 314. Similarly, BSwitch 318 may receive traditional traffic from both of ingress port 306 and ingress tributary port 308. BSwitch may use another forwarding table to switch traditional frames to the appropriate egress port 312 or 314.

In an embodiment, the TSwitch 316 and BSwitch 318 may be implemented as separate switching fabrics with separate forwarding tables on the hybrid switch 302. Alternatively, while TSwitch 316 and BSwitch 318 are illustrated as separate switches in FIG. 3, TSwitch 316 and BSwitch 318 may be implemented using one switching fabric that is logically separated. Such a switching fabric may utilize separate forwarding tables for each of the logical TSwitch 316 and the logical BSwitch 318, or may use a combined forwarding table.

As mentioned above, the TSwitch 316 is used to switch the TE traffic. If a frame received on ingress tributary port 308 is identified as a TE frame, then the received frame is cross-connected to one of the connections 122, 124, 126. As mentioned above, TE traffic must be provisioned to the connection 122, 124, 126 prior to the TE traffic being transported. The TE traffic may be provisioned by inserting the forwarding address, which may include both the destination MAC address and a VLAN address, into a FDB before the traffic is received at the ingress tributary port 308.

Because the TE traffic is pre-provisioned to the connection 122, 124, 126, there is no need to learn the MAC address during packet transport like a traditional switch, and all MAC learning processes may be eliminated from the TSwitch 316. In addition, because the TE traffic is pre-provisioned to the connection 122, 124, 126, it is not desirable to use a spanning tree path (STP) for the TE traffic, and all STP/RSTP/MSTP processes may be eliminated from the TSwitch 316 in some embodiments. To perform switching in real time, one skilled in the art will recognize that a hash algorithm may be used for faster look-ups in the FDB. In addition, properly partitioning the forwarding address may improve the switching performance. In an embodiment, a single forwarding address may be used for a path label, so that the path label is not swapped at each of the nodes 102-114.

The BSwitch 318 may be implemented as a traditional bridge. Traditional bridges enable statically configured FDBs, FDBs built through MAC address registration, and FDBs built via MAC learning. In a specific embodiment, the traditional bridge may implement MAC address registration in accordance with IEEE 802.1ak. When TE traffic and traditional traffic is segregated by physical ports, and if the FDB used by the BSwitch 318 has ports designated for TE traffic, then forwarding to those ports is prohibited. Prohibiting the BSwitch 318 from forwarding any traffic to ports designated for TE traffic may prevent un-expected traffic going through the ports designated for TE traffic. Because the traffic switched on the TSwitch 316 and the BSwitch 318 is strictly segregated, the BSwitch 318 and the TSwitch 316 could share the same address space. In addition, when receiving traffic, the ports designated for TE traffic will not accept frames from ports designated for traditional traffic. The segregation of ports enables ports designated for TE traffic may be invisible to STP/RSTP/MSTP. STP/RSTP/MSTP PDUs might not even send protocol related PDUs to those ports.

Prohibiting the BSwitch 316 from forwarding traffic to ports designated for TE traffic may be accomplished by adding an entry to a filtering database (not shown) for each of the ports designated for TE traffic. Traffic coming from ports designated four TE traffic will not change any pre-configured filtering database or make updates to the typical self-learning filtering databases that may be used for traditional bridged or switched services.

The hybrid switch 302 includes an egress port 310 that is provisioned to transmit TE traffic to the nodes 102-114 along the connection 122, 124, 126. The egress port 310 receives TE frames from the TSwitch 316 and transmits the frames to an ingress port 304 on a corresponding hybrid switch 302 on another of the nodes 102-114 along the connection 122, 124, 126. For example, if node 106 is configured with the hybrid switch 302, the egress port 310 may only transmit TE frames along the connection 126 to node 104 or node 110.

The hybrid switch 302 includes an egress port 312 that is provisioned to transmit traditional traffic to the nodes 102-114. The egress port 312 may receive traditional frames from the BSwitch 318, and transmit the frames to an ingress port 304 on a corresponding hybrid switch 302 on another of the nodes 102-114. For example, if node 108 is configured with the hybrid switch 302, the egress port 312 may transmit traditional frames to any of nodes 102, 104, 110, or 112.

Hybrid switch 302 includes an egress tributary port 314 for transmitting traffic to customer devices or other networks connected to edge nodes in the network 100. The egress tributary port 308 may receive traditional frames and TE frames from either the TSwitch 316 or the BSwitch 318. Upon the TSwitch 316 or the BSwitch 318 determining that a frame is to be sent to the egress tributary port 314, changing of type field back to an original value may be performed before sending the data of the frame to the egress tributary port 314. In an embodiment, when frames are communicated to one of the egress ports 310-314 from the TSwitch 316 or the BSwitch 318, queuing may be used to ensure high priority TE traffic and high priority traditional traffic is communicated first. Best effort traditional traffic may be communicated if there is remaining bandwidth and discarded if there is no bandwidth.

In some networks 100, there may not be free ports available or it may not be cost effective to segregate traditional traffic and TE traffic on different physical ports. In this case, the traditional traffic and TE traffic may be segregated on different logical ports.

FIG. 4 illustrates an embodiment of a hybrid switch 402 that may be used at one of nodes 102-114 to segregate and communicate traffic for traditional data services and traffic for TE data services on different logical ports. Ingress ports 406 and 408, egress ports 412 and 414, and switches 416 and 418 are configured as described in conjunction with ingress ports 306 and 308, egress ports 312 and 314, and switches 316 and 318, respectively.

The hybrid switch 402 includes at least one shared ingress physical port 404 that is logically divided into a plurality of logical ports. As indicated by the dashed line, the ingress port 404 is logically divided into a TE logical port any a traditional logical port. Each logical port is assigned a fixed bandwidth, with the sum of both logical ports being less than or equal to the physical capacity of the shared ingress port 404. For example, if the shared ingress port 404 has a capacity of 10 Gigabits per second (Gb/s), then the TE logical port may be allocated 4 Gb/s dedicated to TE traffic, and the traditional logical port may be allocated 6 Gb/s dedicated to traditional traffic. While the above example has more bandwidth allocated for the traditional logical port, one skilled in the art will recognize that any allocation of bandwidth may be used so that the sum of the bandwidth allocated to the two logical ports is less than or equal to the capacity of the shared ingress port 404. The hybrid switch 402 monitors the amount of traditional traffic traversing through the shared ingress port 404, including data traffic, protocol PDUs, and OAM PDUs, and enforces the total amount of bandwidth allocated to the traditional logical port. Traditional traffic exceeding the allocated bandwidth may be dropped. One method for the hybrid switch 402 to distinguish the traditional traffic and the TE traffic is using the value in the type field 278 of each received frame. One skilled in the art will recognize that other methods or other fields may be used to distinguish between traditional traffic and TE traffic.

The logical ports on shared ingress port 404 forward traffic to the TSwitch 416 or the BSwitch 418 based on the value in the type field 278. TE traffic received on ingress port 404 is forwarded to the TSwitch 416 and traditional traffic is forwarded to the BSwitch 418. The hybrid switch 402 includes a shared egress port 410 that is divided into two logical egress ports. Shared egress port 410 communicates both TE traffic and traditional traffic to a corresponding shared ingress port 404 on nodes 102-114. The egress port 410 may receive traditional frames from the BSwitch 418 and receive TE frames from the TSwitch 416.

In an embodiment, for a network 100 to support both TE traffic and traditional traffic segregated on logical ports, each of the nodes 102-114 (intermediate and edge) may have at least one port partitioned into two logical ports, each with a fixed bandwidth.

Alternatively, the network 100 may have some of the nodes 102-114 communicate with TE traffic and traditional traffic segregated on different logical ports and some of the nodes 102-114 communicate with TE traffic and traditional traffic segregated on different physical ports. In this alternative, hybrid switch 402 may have a plurality of ingress logical ports switched to a single egress physical port or a single ingress physical port switched to a plurality of egress logical ports. In this case, the capacity of the single physical port should not be less than the sum of the capacity of the plurality of logical ports.

For examples, hybrid switch 402 may have two ingress physical ports, each divided into a TE logical port and a traditional logical port. The first physical port may be divided so that the TE logical port is allocated 4 Gb/s of bandwidth and the traditional logical port is allocated 6 Gb/s of bandwidth. The second physical port may be divided so that the TE logical port is allocated 6 Gb/s of bandwidth and the traditional logical port is allocated 4 Gb/s of bandwidth. Hybrid switch 402 may also have a single egress TE traffic physical port with a total capacity of 10 Gb/s and a single egress traditional traffic port with a total capacity of 10 Gb/s. Both of the ingress TE logical ports may be switched to the single egress TE traffic physical port. Similarly, both of the ingress traditional ports may be switched to the single egress traditional traffic port. While the above example has specific amounts of bandwidth allocated to the two logical ports, one skilled in the art will recognize that any allocation of bandwidth may be used so that the sum of the bandwidth allocated to the two logical ports is not greater than the capacity of the single physical port.

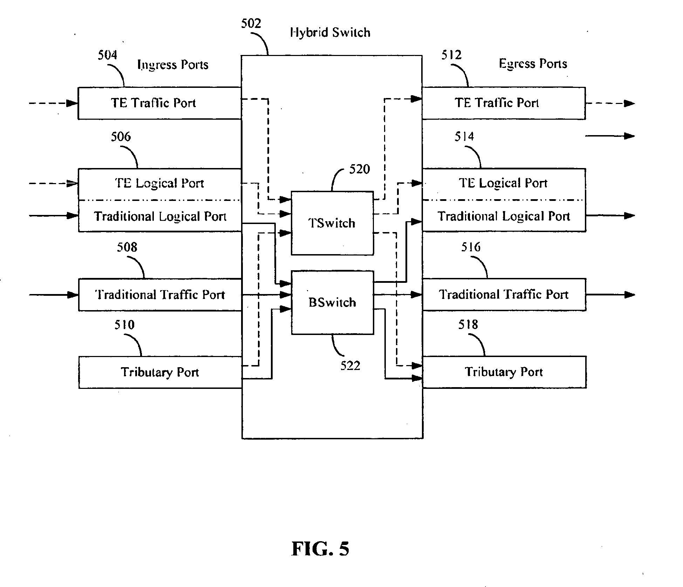

FIG. 5 illustrates an embodiment of a hybrid switch 502 that may be used at one of nodes 102-114 to segregate and communicate traffic for traditional data services and traffic for TE data services on different physical ports and different logical ports. Ingress ports 504, 508, and 510, egress ports 512, 516, and 518, and switches 520 and 522 are configured as described in conjunction with ingress ports 304-308, egress ports 310-314, and switches 316 and 318, respectively. In addition, ingress port 506 and egress port 514 are configured as described in conjunction with ingress port 404 and egress port 410.

In accordance with the value of the type field 278, the TSwitch 520 may receive TE traffic from ingress port 504, the TE logical port on ingress port 506, or the tributary port 510. The TSwitch 520 forwards TE traffic received from any of the ingress ports 504, 506, or 510 to one of the egress port 512, the TE logical port on egress port 514, or the tributary port 518. TE traffic received on ingress port 504 may be forwarded to any of egress ports 512, 514, or 518. TE traffic received on ingress port 506 may be forwarded to any of egress ports 512, 514, or 518. TE traffic received on ingress tributary port 510 may be forwarded to any of egress ports 512, 514, or 518.

In accordance with the value of the type field 278, the BSwitch 522 may receive traditional traffic from the traditional logical port on ingress port 506, ingress port 508, or tributary port 510. The BSwitch 522 forwards traditional traffic received from any of the ingress ports 506-510 to one of the egress ports 514-518. Traditional traffic received on ingress port 506 may be forwarded to any of egress ports 514-518. Traditional traffic received on ingress port 508 may be forwarded to any of egress ports 514-518. Traditional traffic received on ingress tributary port 510 may be forwarded to any of egress ports 514-518.

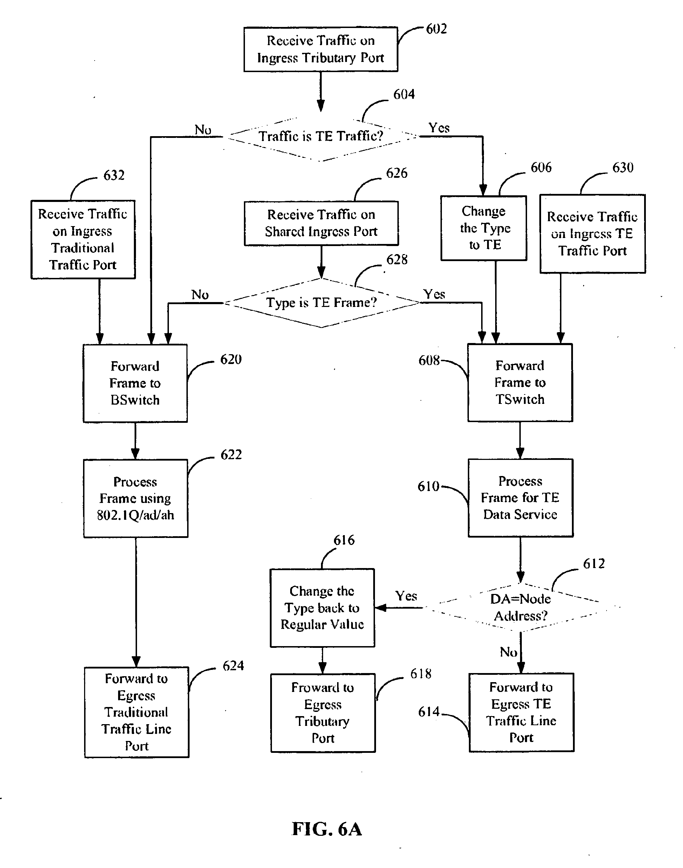

FIG. 6A illustrates a method for processing a frame at any of hybrid switches 302, 402, or 502 at any of nodes 102-114 in the mixed communications network 100. At block 602, the hybrid switch 302, 402, or 502 receives data packets on ingress tributary port 308, 408, or 510. Block 604 determines whether the frame is provisioned as TE traffic. If the frame is provisioned as TE traffic, at block 606, the type field 278 in the MAC frame is modified to indicate the frame is a TE frame. At block 608, the frame is forwarded to the TSwitch 316, 416, or 520. At block 610, the frame is processed to cross-connect to one of the connection 122, 124, 126. At block 612, the destination MAC address is compared to the MAC address of the node. If the MAC addresses do not match, then in block 614 the TSwitch 316, 416, or 520 forwards the frame to an egress line port in accordance with the forwarding table of the TSwitch 316, 416, or 520. If the MAC addresses match, then in block 616 the frame's type field is changed back to a regular VLAN type. At block 618, the frame with the changed type field is forwarded to the egress tributary port 314, 414, or 518 for use by a customer device or another network 100.

If it is determined in block 604 that the frame is provisioned as traditional traffic, at block 620, the frame is forwarded to the BSwitch 318, 418, or 522. At block 622, the frame is processed at the BSwitch 318, 418, or 522 in accordance with IEEE 802.1 Q, IEEE 802.1ad, and/or IEEE 802.1 ah. At block 624, the frame is forwarded to an egress tributary port for traditional traffic. For example, the frame may be forwarded to the egress traditional traffic port 312, 412, or 516 or if the frame is at its destination then the frame may be forwarded to the egress tributary port 314, 414, or 518.

At block 626, the hybrid switch 302, 402, or 502 receives frames on one of the shared ingress line ports 404 or 506. At block 628, the value in the type field 278 can be examined to differentiate the traffic as traditional traffic or TE traffic. If the received frame is determined to be TE traffic then the method continues at block 608 as described above. If the received frame is determined to be traditional traffic then the method continues at block 620 as described above. At block 630, upon frames being received on the ingress TE traffic port 304 or 504 the method continues at block 608 as described above. At block 632, upon frames being received on ingress traditional traffic port 306, 406, or 508 the method continues at block 620 as described above.

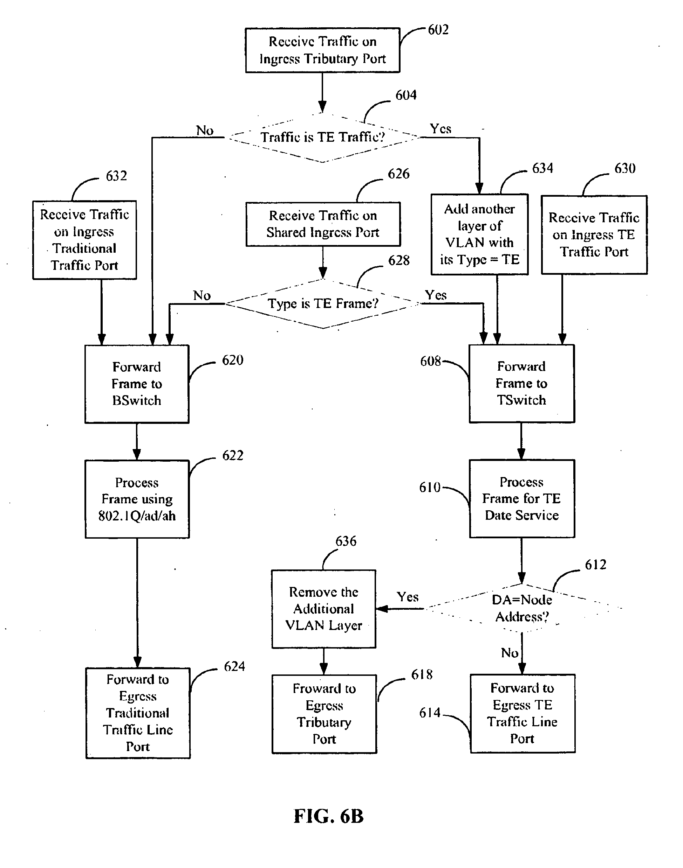

FIG. 6B shows another method of mapping traffic from tributary ports to TE traffic. Blocks with similar element numbers shown in FIG. 6B arc described in detail above in conjunction with FIG. 6A. In the method shown in FIG. 6B, rather than changing a type field 278 in block 606, in block 634 another layer of VLAN with the type field 278 indicating the frames as TE traffic is added when frames enter into provider backbone network. For traffic exiting the provider backbone network, at block 636 the entire VLAN with the TE type field is removed if the edge node detects the destination MAC address of the frame matches its own address, which leaves the original VLAN tag and its original value in the type field 278 in the frames to be forwarded to customer device.

In addition to enabling both traditional traffic and TE traffic on a network 100 without impacting each other, segregating the traffic by physical and/or logical ports enables efficient management and verification of the connection 122, 124, 126 though a path trace message. When transporting TE data, it is important for customers and providers to easily identify the path of the data to be able to properly establish the connection 122, 124, 126 in accordance with available bandwidth and to verify the connection 122, 124, 126 is working properly. In SONET/SDH networks, Path Trace is used to verify circuit connectivity and assign a circuit with a specific value.

In an embodiment, the connection 122, 124, 126 may also be assigned a special value, such as a word of eight characters. The special value can be provisioned by customers or providers to uniquely identify the connection 122, 124, 126 and can be used to test the connectivity of the path. Rather than testing connectivity using a broadcast Connectivity Check Message in accordance with IEEE 802.1ag to check an entire domain's connectivity, the "path trace" as used herein may be switched along a connection 122, 124, 126 to verify the identity and the connectivity of the connection 122, 124, 126.

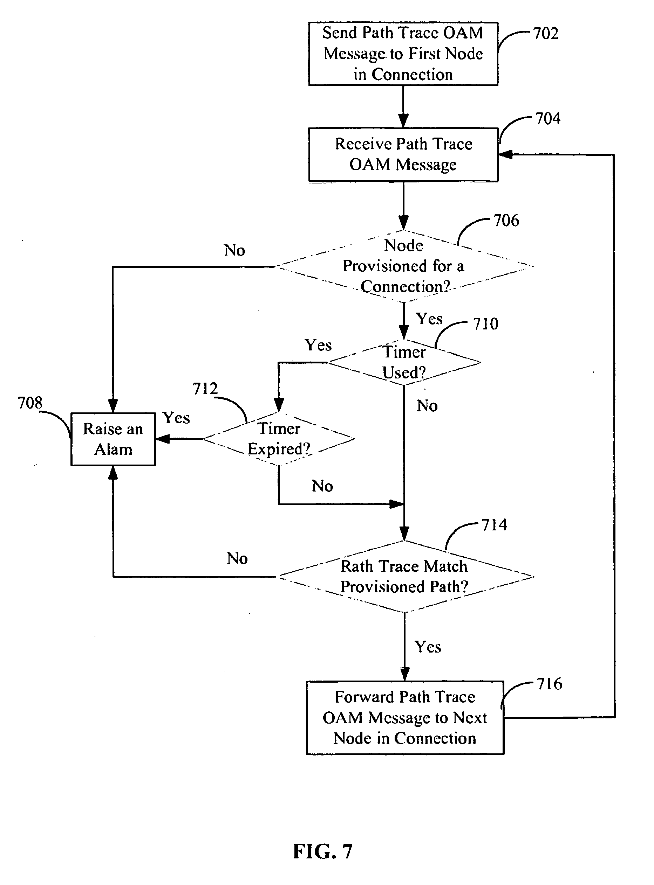

FIG. 7 illustrates an embodiment of a method for communicating a path trace OAM message. In block 702, a path trace OAM message is sent to a first node of the connection 122, 124, 126. For example, a first node of connection 122 is node 102. The path trace OAM message includes a special value identifying the connection 122, 124, 126. In block 704, the first node receives the path trace OAM message. In block 706, the node determines if it is provisioned for any connection 122, 124, 126. If the node is not provisioned for any connection 122, 124, 126, an alarm is raised in block 708. The alarm may include an indication of the special value, the address of the node, and the source address of the path trace OAM message.

If it is determined that the node is provisioned for a connection 122, 124, 126 in block 706, then in block 710 it is determined whether an optional timer is being used in block 710. If a timer is being used then in block 712 it is determined whether the timer has expired. The timer may be used by nodes that arc provisioned with a connection 122, 124, 126, but have not received a path trace OAM message within a predetermined amount of time. If it is determined that the timer has expired in block 710, then an alarm is raised in block 708. In an embodiment, blocks 710 and 712 may be implemented as an independent and parallel method to that illustrated in FIG. 7.

If it is determined in block 712 that the time has not expired or if it is determined in block 710 that a timer is not being used, then in block 714, the node compares the special value of the path trace OAM message to the special value of the connections 122, 124, 126 provisioned for the node. If the special values do not match then the alarm is raised in block 708. For example, if node 104, which is provisioned for connections 124 and 126, receives a path trace message identifying connection 122, then an alarm is raised. If it is determined in block 712 that the special values match, then the path trace OAM message is forwarded to the next node in the connection 122, 124, 126 and the method repeats at block 704. If no alarms are raised, then the connectivity of the connection 122, 124, 126 is verified. If an alarm is raised, then the misprovisioned node may be quickly identified and corrected.

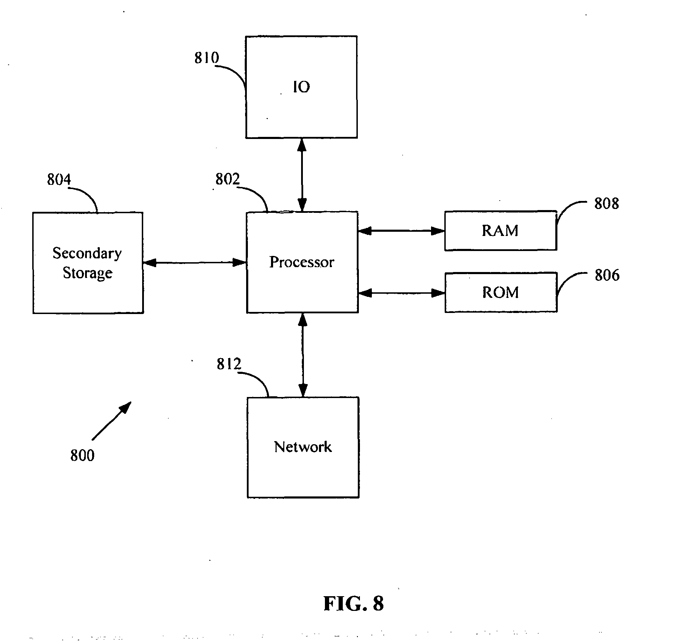

The mixed network described above may be implemented using any general-purpose network component, such as a computer, router, switch, or bridge, with sufficient processing power, memory resources, and network throughput capability to handle the necessary workload placed upon it. FIG. 8 illustrates a typical, general-purpose network component suitable for implementing one or more embodiments of a node disclosed herein. The network component 800 includes a processor 802 (which may be referred to as a central processor unit or CPU) that is in communication with memory devices including secondary storage 804, read only memory (ROM) 806, random access memory (RAM) 808, input/output (I/O) 810 devices, and network connectivity devices 812. The processor may be implemented as one or more CPU chips.

The secondary storage 804 is typically comprised of one or more disk drives or tape drives and is used for non-volatile storage of data and as an over-flow data storage device if RAM 808 is not large enough to hold all working data. Secondary storage 804 may be used to store programs that are loaded into RAM 808 when such programs are selected for execution. The ROM 806 is used to store instructions and perhaps data that are read during program execution. ROM 806 is a non-volatile memory device that typically has a small memory capacity relative to the larger memory capacity of secondary storage. The RAM 808 is used to store volatile data and perhaps to store instructions. Access to both ROM 806 and RAM 808 is typically faster than to secondary storage 804.

While several embodiments have been provided in the present disclosure, it should be understood that the disclosed systems and methods might be embodied in many other specific forms without departing from the spirit or scope of the present disclosure. The present examples are to be considered as illustrative and not restrictive, and the intention is not to be limited to the details given herein. For example, the various elements or components may be combined or integrated in another system or certain features may be omitted, or not implemented.

In addition, techniques, systems, subsystems, and methods described and illustrated in the various embodiments as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component whether electrically, mechanically, or otherwise. Other examples of changes, substitutions, and alterations are ascertainable by one skilled in the art and could be made without departing from the scope disclosed herein.

## Claims

1. A network switch (302, 402, 502) adapted for switching traffic for traffic engineered, TE, data services and for traditional data services, the switch is **characterized by** comprising:
a first ingress port (304-308, 404-408, 504-510) configured to only receive a first type of traffic;
a second ingress port (304-308, 404-408, 504-510) configured to only receive a second type of traffic;
a first egress port (310-314, 410-414, 512-518) configured to communicate only the first type of traffic; and
a second egress port (310-314, 410-414, 512-518) configured to communicate only the second type of traffic; wherein
the first type of traffic is aTE traffic, and the second type of traffic is a traditional traffic.

2. The network switch of claim 1, wherein
the switch is configured to segregate the traffic for the TE data services and the traffic for the traditional data services so that the first ingress port does not communicate with or affect the second egress port and the second ingress port does not communicate with or affect the first egress port.

3. The network switch of claim 1 or 2, further comprising:
a third ingress port configured to receive both the first type of traffic and the second type of traffic,
wherein the third ingress port configured to logically divide a total bandwidth of the third ingress port into at least two logical ports,
wherein a first logical ingress port is allocated a first portion of the total bandwidth and a second logical ingress port is allocated a second portion of the total bandwidth, and
wherein the third ingress port receives up to the first portion of the total bandwidth of the first type of traffic and receives up to the second portion of the total bandwidth of the second type of traffic.

4. The network switch of claim 3, further comprising:
a third egress port configured to communicate both the first type of traffic and the second type of traffic,
wherein the third egress port is configured to logically divide the total bandwidth of the third egress port into at least two logical ports,
wherein a first logical egress port is allocated the first portion of the total bandwidth and a second logical egress port is allocated the second portion of the total bandwidth, and
wherein the third egress port communicates up to the first portion of the total bandwidth of the first type of traffic and communicates up to the second portion of the total bandwidth of the second type of traffic.

5. The network switch of claim 1 or 2, wherein the TE traffic is assigned to a node-to-node pre-configured path (122, 124, 126) spanning two or more nodes (102-114) within a network (100), wherein each of nodes (102-114) along the pre-configured path (122, 124, 126) is allocated a pre-determined amount of bandwidth.

6. The network switch of claim 5, wherein the network is an Ethernet network.

7. The network switch of claim 5, wherein
the first ingress port (304) is configured to only receive the TE traffic from the first egress port (310) on another network switch (302) along the node-to-node preconfigured path (126); if any frames received are for the traditional traffic or for the TE traffic from another node-to-node path other than the pre-configured path, the frames are dropped.

8. The network switch of claim 1, further comprising:
a third ingress port configured to receive data from a device, wherein upon receiving data on the third ingress port, if the received data is the first type of traffic, a type field (278) in the received data is changed to identify the received data as the first type of traffic.

9. The network switch of claim 1, further comprising:
a third egress port configured to send data to a device, wherein upon sending data on the third egress port, if the sent data is the first type of traffic, a type field (278) in the sent data is changed to an original value.

10. The network switch of claim 1, further comprising:
a third ingress port configured to receive data from a device, wherein upon receiving data on the third ingress port, if the received data is the first type of traffic, a VLAN layer is added to the received data with a type field set to identify the received data as the first type of traffic.

11. The network switch of claim 1, further comprising:
a third egress port configured to send data to a device, wherein upon sending data on the third egress port, if the sent data is a first type of traffic, a VLAN layer is removed from the sent data.

12. The network switch of claim 1, further comprising:
a first switch engine configured to only forward TE traffic and
a separate second switch engine configured to only forward traditional traffic.

13. The network switch of claim 12, wherein the first switch engine and the second switch engine are implemented on one single physical switch engine that is logically partitioned into two separate switch entities.

14. The network switch of claim 12, wherein the first switch engine and the second switch engine are each implemented on different physical switch engines.

15. A method in a network switch (302, 402, 502) for switching traffic for traffic engineered, TE, data services and for traditional data services, comprising:
partitioning a plurality of traffic into traffic of a first type and traffic of a second type;
dedicating a first ingress port (304-308, 444-408, 504-510) and a first egress port (310-314, 410-414, 512-518) of the switch for communicating the first type of traffic;
dedicating a second ingress port (304-308, 404-408, 504-510) and a second egress port (310-314, 410-414, 512-518) of the switch for communicating the second type of traffic; and wherein
the first type of traffic is a TE traffic; and the second type of traffic is a traditional traffic.

16. The method of claim 15,
wherein the TE traffic is assigned to a node-to-node pre-configured path (122, 124, 126) spanning two or more nodes (102-114), wherein each of the nodes (102-114) along the pre-configured path (122, 124, 126) is allocated a pre-determined amount of bandwidth.

17. The method of claim 16, wherein the method further comprises:
dropping any frames received are for the traditional traffic or for the TE traffic from a node-to-node path other than the pre-configured path, if the first ingress port (304) is configured to only receive the TE traffic from the first egress port (310) on another network switch (302) along the node-to-node preconfigured path (126).

18. The method of claim 16, wherein the method further comprises:
receiving a path trace message at a first node of a first node-to-node pre-configured path;
verifying if the first node is provisioned for the first node-to-node pre-configured path;
forwarding the path trace message to a second and remaining nodes of the first node-to-node pre-configured path.

19. The method of claim 18, wherein verifying if a node is provisioned for the node-to-node pre-configured path comprises:
determining if the node is provisioned for a node-to-node pre-configured path; and
comparing a value of the path trace message that identifies the path trace message that corresponds to the first node-to-node pre-configured path to a value of the node that identifies the node that corresponds to the node-to-node pre-configured path.

20. The method of claim 18, wherein the method further comprises raising an alarm upon verifying any of a node that is not provisioned for the first node-to-node pre-configured path receiving the path trace message or a node that is provisioned for the first node-to-node pre-configured path not receiving the path trace message within a predetermined period of time if there is a predetermined period of time is defined.

21. The method of claim 16, wherein the method further comprises:
forwarding only the TE traffic received on ingress ports of a node to a first switch engine; and
forwarding only the traditional traffic received on ingress ports of a node to a second switch engine.

## Patentansprüche

1. Netzwerk-Switch (302, 402, 502), der zum Vermitteln von Verkehr für verkehrstechnische bzw. TE-Datendienste und für traditionelle Datendienste ausgelegt ist, wobei der Switch **dadurch gekennzeichnet ist, dass** er Folgendes umfasst:
einen ersten Eingangsport (304-308, 404-408, 504-510), der dafür ausgelegt ist, nur eine erste Art von Verkehr zu empfangen;
einen zweiten Eingangsport (304-308, 404-408, 504-510), der dafür ausgelegt ist, nur eine zweite Art von Verkehr zu empfangen;
einen ersten Ausgangsport (310-314, 410-414, 512-518), der dafür ausgelegt ist, nur die erste Art von Verkehr zu übermitteln; und
einen zweiten Ausgangsport (310-314, 410-414, 512-518), der dafür ausgelegt ist,
nur die zweite Art von Verkehr zu übermitteln; wobei
die erste Art von Verkehr ein TE-Verkehr und die zweite Art von Verkehr ein traditioneller Verkehr ist.

2. Netzwerk-Switch nach Anspruch 1, wobei
der Switch dafür ausgelegt ist, den Verkehr für die TE-Datendienste und den Verkehr für die traditionellen Datendienste zu trennen, so dass der erste Eingangsport nicht mit dem zweiten Ausgangsport kommuniziert oder diesen beeinflusst und der zweite Eingangsport nicht mit dem ersten Ausgangsport kommuniziert oder diesen beeinflusst.

3. Netzwerk-Switch nach Anspruch 1 oder 2, ferner umfassend:
einen dritten Eingangsport, der dafür ausgelegt ist, sowohl die erste Art von Verkehr als auch die zweite Art von Verkehr zu empfangen,
wobei der dritte Eingangsport dafür ausgelegt ist, eine Gesamtbandbreite des dritten Eingangsports logisch in mindestens zwei logische Ports aufzuteilen,
wobei ein erster logischer Eingangsport einen ersten Teil der Gesamtbandbreite zugeteilt bekommt und ein zweiter logischer Eingangsport einen zweiten Teil der Gesamtbandbreite zugeteilt bekommt und
wobei der dritte Eingangsport höchstens den ersten Teil der Gesamtbandbreite der ersten Art von Verkehr empfängt und höchstens den zweiten Teil der Gesamtbandbreite der zweiten Art von Verkehr empfängt.

4. Netzwerk-Switch nach Anspruch 3, ferner umfassend:
einen dritten Ausgangsport, der dafür ausgelegt ist, sowohl die erste Art von Verkehr als auch die zweite Art von Verkehr zu übermitteln,
wobei der dritte Ausgangsport dafür ausgelegt ist, die Gesamtbandbreite des dritten Ausgangsports logisch in mindestens zwei logische Ports aufzuteilen,
wobei ein erster logischer Ausgangsport den ersten Teil der Gesamtbandbreite zugeteilt bekommt und ein zweiter logischer Ausgangsport den zweiten Teil der Gesamtbandbreite zugeteilt bekommt und
wobei der dritte Ausgangsport höchstens den ersten Teil der Gesamtbandbreite der ersten Art von Verkehr übermittelt und höchstens den zweiten Teil der Gesamtbandbreite der zweiten Art von Verkehr übermittelt.

5. Netzwerk-Switch nach Anspruch 1 oder 2, wobei der TE-Verkehr einem von Knoten zu Knoten vorkonfigurierten Pfad (122, 124, 126) zugewiesen wird, der zwei oder mehr Knoten (102-114) in einem Netzwerk (100) überspannt, wobei jeder der Knoten (102-114) auf dem vorkonfigurierten Pfad (122, 124, 126) eine vorbestimmte Menge von Bandbreite zugeteilt bekommt.

6. Netzwerk-Switch nach Anspruch 5, wobei das Netzwerk ein Ethernet-Netzwerk ist.

7. Netzwerk-Switch nach Anspruch 5, wobei
der erste Eingangsport (304) dafür ausgelegt ist, nur den TE-Verkehr von dem ersten Ausgangsport (310) an einem anderen Netzwerk-Switch (302) auf dem von Knoten zu Knoten vorkonfigurierten Pfad (126) zu empfangen; und wenn irgendwelche empfangenen Rahmen für den traditionellen Verkehr oder für den TE-Verkehr von einem anderen Knoten-zu-Knoten-Pfad als dem vorkonfigurierten Pfad bestimmt sind, werden die Rahmen abgeworfen.

8. Netzwerk-Switch nach Anspruch 1, ferner umfassend:
einen dritten Eingangsport, der dafür ausgelegt ist, Daten von einer Vorrichtung zu empfangen, wobei beim Empfang von Daten an dem dritten Eingangsport, wenn die empfangenen Daten die erste Art von Verkehr sind, ein Typfeld (278) in den empfangenen Daten geändert wird, um die empfangenen Daten als die erste Art von Verkehr zu identifizieren.

9. Netzwerk-Switch nach Anspruch 1, ferner umfassend:
einen dritten Ausgangsport, der dafür ausgelegt ist, Daten zu einer Vorrichtung zu senden, wobei beim Senden von Daten an dem dritten Ausgangsport, wenn die gesendeten Daten die erste Art von Verkehr sind, ein Typfeld (278) in den gesendeten Daten in einen ursprünglichen Wert umgeändert wird.

10. Netzwerk-Switch nach Anspruch 1, ferner umfassend:
einen dritten Eingangsport, der dafür ausgelegt ist, Daten von einer Vorrichtung zu empfangen, wobei beim Empfang von Daten an dem dritten Eingangsport, wenn die empfangenen Daten die erste Art von Verkehr sind, eine VLAN-Schicht zu den empfangenen Daten mit einem Typfeld hinzugefügt wird, das so gesetzt wird, dass die empfangenen Daten als die erste Art von Verkehr identifiziert werden.

11. Netzwerk-Switch nach Anspruch 1, ferner umfassend:
einen dritten Ausgangsport, der dafür ausgelegt ist, Daten zu einer Vorrichtung zu senden, wobei beim Senden von Daten an dem dritten Ausgangsport, wenn die gesendeten Daten eine erste Art von Verkehr sind, eine VLAN-Schicht von den gesendeten Daten entfernt wird.

12. Netzwerk-Switch nach Anspruch 1, ferner umfassend:
eine erste Switch-Maschine, die dafür ausgelegt ist, nur TE-Verkehr weiterzuleiten, und
eine separate zweite Switch-Maschine, die dafür ausgelegt ist, nur traditionellen Verkehr weiterzuleiten.

13. Netzwerk-Switch nach Anspruch 12, wobei die erste Switch-Maschine und die zweite Switch-Maschine auf einer einzigen physischen Switch-Maschine implementiert sind, die logisch in zwei separate Switch-Identitäten partitioniert ist.

14. Netzwerk-Switch nach Anspruch 12, wobei die erste Switch-Maschine und die zweite Switch-Maschine jeweils auf verschiedenen physischen Switch-Maschinen implementiert sind.

15. Verfahren in einem Netzwerk-Switch (302, 402, 502) zum Vermitteln von Verkehr für verkehrstechnische bzw. TE-Datendienste und für traditionelle Datendienste, umfassend:
Partitionieren einer Verkehrsvielzahl in Verkehr einer ersten Art und Verkehr einer zweiten Art;
Widmen eines ersten Eingangsports (304-308, 404-408, 504-510) und eines ersten Ausgangsports (310-314, 410-414, 512-518) des Switch für das Übermitteln der ersten Art von Verkehr;
Widmen eines zweiten Eingangsports (304-308, 404-408, 504-510) und eines zweiten Ausgangsports (310-314, 410-414, 512-518) des Switch für das Übermitteln der zweiten Art von Verkehr; und wobei
die erste Art von Verkehr ein TE-Verkehr ist; und die zweite Art von Verkehr ein traditioneller Verkehr ist.

16. Verfahren nach Anspruch 15,
wobei der TE-Verkehr einem von Knoten zu Knoten vorkonfigurierten Pfad (122, 124, 126) zugewiesen wird, der zwei oder mehr Knoten (102-114) überspannt, wobei jeder der Knoten (102-114) auf dem vorkonfigurierten Pfad (122, 124, 126) eine vorbestimmte Menge Bandbreite zugeteilt bekommt.

17. Verfahren nach Anspruch 16, wobei das Verfahren ferner Folgendes umfasst:
Abwerfen jeglicher empfangener Rahmen, die für traditionellen Verkehr oder für den TE-Verkehr von einem Knoten-zu-Knoten-Pfad außer dem vorkonfigurierten Pfad bestimmt sind, wenn der erste Eingangsport (304) dafür ausgelegt ist, nur den TE-Verkehr von dem ersten Ausgangsport (310) an einem anderen Netzwerk-Switch (302) auf dem von Knoten zu Knoten vorkonfigurierten Pfad (126) zu empfangen.

18. Verfahren nach Anspruch 16, wobei das Verfahren ferner Folgendes umfasst:
Empfangen einer Pfad-Trace-Nachricht in einem ersten Knoten eines ersten von Knoten-zu-Knoten vorkonfigurierten Pfads;
Verifizieren, ob der erste Knoten für den ersten von Knoten-zu-Knoten vorkonfigurierten Pfad bereitgestellt ist;
Weiterleiten der Pfad-Trace-Nachricht zu einem zweiten und übrigen Knoten des ersten von Knoten-zu-Knoten vorkonfigurierten Pfads.

19. Verfahren nach Anspruch 18, wobei das Verifizieren, ob ein Knoten für den von Knoten-zu-Knoten vorkonfigurierten Pfad bereitgestellt ist, Folgendes umfasst:
Bestimmen, ob der Knoten für einen von Knoten-zu-Knoten vorkonfigurierten Pfad bereitgestellt ist; und
Vergleichen eines Werts der Pfad-Trace-Nachricht, der die Pfad-Trace-Nachricht identifiziert, die dem ersten von Knoten-zu-Knoten vorkonfigurierten Pfad entspricht, mit einem Wert des Knotens, der den Knoten identifiziert, der dem von Knoten-zu-Knoten vorkonfigurierten Pfad entspricht.

20. Verfahren nach Anspruch 18, wobei das Verfahren ferner umfasst, einen Alarm einzuleiten, wenn verifiziert wird, dass irgendeiner eines Knotens, der nicht für den ersten von Knoten-zu-Knoten vorkonfigurierten Pfad bereitgestellt ist, eine Pfad-Trace-Nachricht empfängt, oder ein Knoten, der für den ersten von Knoten-zu-Knoten vorkonfigurierten Pfad bereitgestellt ist, die Pfad-Trace-Nachricht nicht innerhalb eines vorbestimmten Zeitraums empfängt, wenn ein vorbestimmter Zeitraum definiert ist.

21. Verfahren nach Anspruch 16, wobei das Verfahren ferner Folgendes umfasst:
Weiterleiten nur des TE-Verkehrs, der an Eingangsports eines Knotens empfangen wird, zu einer ersten Switch-Maschine; und
Weiterleiten nur des traditionellen Verkehrs, der an Eingangsports eines Knotens empfangen wird, zu einer zweiten Switch-Maschine.

## Revendications

1. Commutateur de réseau (302, 402, 502) adapté pour la commutation de trafic de services de données gérés en fonction du trafic, TE et de services de données traditionnels, le commutateur étant **caractérisé en ce qu'**il comprend :
un premier port d'entrée (304-308, 404-408, 504-510) configuré pour recevoir uniquement un premier type de trafic ;
un second port d'entrée (304-308, 404-408, 504-510) configuré pour recevoir uniquement un second type de trafic ;
un premier port de sortie (310-314, 410-414, 512-518) configuré pour communiquer uniquement le premier type de trafic ; et
un second port de sortie (310-314, 410-414, 512-518) configuré pour communiquer uniquement le second type de trafic ; dans lequel
le premier type de trafic est un trafic TE, et le second type de trafic est un trafic traditionnel.

2. Commutateur de réseau selon la revendication 1, dans lequel
le commutateur est configuré pour séparer le trafic des services de données TE et le trafic des services de données traditionnels de telle sorte que le premier port d'entrée ne communique pas avec le second port de sortie ou affecte celui-ci et que le second port d'entrée ne communique pas avec le premier port de sortie ou affecte celui-ci.

3. Commutateur de réseau selon la revendication 1 ou 2, comprenant en outre :
un troisième port d'entrée configuré pour recevoir à la fois le premier type de trafic et le second type de trafic ;
dans lequel le troisième port d'entrée configuré pour diviser logiquement une largeur de bande totale du troisième port d'entrée en au moins deux ports logiques,
dans lequel à un premier port d'entrée logique est attribuée une première partie de la largeur de bande totale et à un second port d'entrée logique est attribuée une seconde partie de la largeur de bande totale, et
dans lequel le troisième port d'entrée reçoit jusqu'à la première partie de la largeur de bande totale du premier type de trafic et reçoit jusqu'à la seconde partie de la largeur de bande totale du second type de trafic.

4. Commutateur de réseau selon la revendication 3, comprenant en outre :
un troisième port de sortie configuré pour communiquer à la fois le premier type de trafic et le second type de trafic,
dans lequel le troisième port de sortie est configuré pour diviser logiquement la largeur de bande totale du troisième port de sortie en au moins deux ports logiques, dans lequel à un premier port de sortie logique est attribuée la première partie de la largeur de bande totale et à un second port de sortie logique est attribuée la seconde partie de la largeur de bande totale, et
dans lequel le troisième port de sortie communique jusqu'à la première partie de la largeur de bande totale du premier type de trafic et communique jusqu'à la seconde partie de la largeur de bande totale du second type de trafic.

5. Commutateur de réseau selon la revendication 1 ou 2, dans lequel le trafic TE est attribué à un chemin préconfiguré noeud à noeud (122, 124, 126) couvrant deux ou plusieurs noeuds (102-114) dans un réseau (100), dans lequel à chacun des noeuds (102-114) le long du chemin préconfiguré (122, 124, 126) est attribuée une quantité de largeur de bande prédéterminée.

6. Commutateur de réseau selon la revendication 5, dans lequel le réseau est un réseau Ethernet.

7. Commutateur de réseau selon la revendication 5, dans lequel
le premier port d'entrée (304) est configuré pour recevoir uniquement le trafic TE depuis le premier port de sortie (310) sur un autre commutateur de réseau (302) le long du chemin préconfiguré noeud à noeud (126) ; si des trames reçues se rapportent au trafic traditionnel ou au trafic TE depuis un autre chemin noeud à noeud autre que le chemin préconfiguré, les trames sont abandonnées.

8. Commutateur de réseau selon la revendication 1, comprenant en outre :
un troisième port d'entrée configuré pour recevoir des données depuis un dispositif, dans lequel la réception de données sur le troisième port d'entrée, si les données reçues sont du premier type de trafic, un champ de type (278) dans les données reçues est changé pour identifier les données reçues comme premier type de trafic.

9. Commutateur de réseau selon la revendication 1, comprenant en outre :
un troisième port de sortie configuré pour envoyer des données à un dispositif, dans lequel à l'envoi de données sur le troisième port de sortie, si les données envoyées sont du premier type de trafic, un champ de type (278) dans les données envoyées est changé sur une valeur d'origine.

10. Commutateur de réseau selon la revendication 1, comprenant en outre :
un troisième port d'entrée configuré pour recevoir des données depuis un dispositif, dans lequel à la réception de données sur le troisième port d'entrée, si les données reçues sont du premier type de trafic, une couche VLAN est ajoutée aux données reçues avec un champ de type réglé pour identifier les données reçues comme premier type de trafic.

11. Commutateur de réseau selon la revendication 1, comprenant en outre :
un troisième port de sortie configuré pour envoyer des données à un dispositif, dans lequel à l'envoi de données sur le troisième port de sortie, si les données envoyées sont un premier type de trafic, une couche VLAN est retirée des données envoyées.

12. Commutateur de réseau selon la revendication 1, comprenant en outre :
un premier moteur de commutation configuré pour acheminer uniquement le trafic TE et
un second moteur de commutation séparé configuré pour acheminer uniquement le trafic traditionnel.

13. Commutateur de réseau selon la revendication 12, dans lequel le premier moteur de commutation et le second moteur de commutation sont mis en oeuvre sur un seul moteur de commutation physique qui est compartimenté logiquement en deux entités de commutation séparées.

14. Commutateur de réseau selon la revendication 12, dans lequel le premier moteur de commutation et le second moteur de commutation sont chacun mis en oeuvre sur des moteurs de commutation physiques différents.

15. Procédé dans un commutateur de réseau (302, 402, 502) de commutation de trafic de services de données gérés en fonction du trafic, TE et de services de données traditionnels, comprenant :
la compartimentation d'une pluralité de trafics en un trafic d'un premier type et un trafic d'un second type ;
l'affectation d'un premier port d'entrée (304-308, 404-408, 504-510) et d'un premier port de sortie (310-314, 410-414, 512-518) du commutateur pour communiquer le premier type de trafic ;
l'affectation d'un second port d'entrée (304-308, 404-408, 504-510) et d'un second port de sortie (310-314, 410-414, 512-518) du commutateur pour communiquer le second type de trafic ; et dans lequel
le premier type de trafic est un trafic TE ; et le second type de trafic est un trafic traditionnel.

16. Procédé selon la revendication 15,
dans lequel le trafic TE est assigné à un chemin préconfiguré noeud à noeud (122, 124, 126) couvrant deux ou plusieurs noeuds (102-114), dans lequel chacun des noeuds (102-114) le long du chemin préconfiguré (122, 124, 126) se voit attribuer une quantité de largeur de bande prédéterminée.

17. Procédé selon la revendication 16, le procédé comprenant en outre :
l'abandon de toutes trames reçues se rapportant au trafic traditionnel ou au trafic TE depuis un chemin noeud à noeud autre que le chemin préconfiguré, si le premier port d'entrée (304) est configuré pour recevoir uniquement le trafic TE depuis le premier port de sortie (310) sur un autre commutateur de réseau (302) le long du chemin préconfiguré noeud à noeud (126).

18. Procédé selon la revendication 16, le procédé comprenant en outre :
la réception d'un message de suivi de chemin au niveau d'un premier noeud d'un premier chemin préconfiguré noeud à noeud ;
la vérification si le premier noeud est en service pour le premier chemin préconfiguré noeud à noeud ;
l'acheminement du message de suivi de chemin à un second noeud et aux noeuds restant du premier chemin préconfiguré noeud à noeud.

19. Procédé selon la revendication 18, dans lequel la vérification qu'un noeud est en service pour le chemin préconfiguré noeud à noeud comprend :
la détermination si le noeud est en service pour un chemin préconfiguré noeud à noeud ; et
la comparaison d'une valeur du message de suivi de chemin qui identifie le message de suivi de chemin qui correspond au premier chemin préconfiguré noeud à noeud à une valeur du noeud qui identifie le noeud qui correspond au chemin préconfiguré noeud à noeud.

20. Procédé selon la revendication 18, le procédé comprenant en outre le déclenchement d'une alarme à la vérification de l'un quelconque d'un noeud qui n'est pas en service pour le premier chemin préconfiguré noeud à noeud recevant le message de suivi de chemin ou d'un noeud qui est en service pour le premier chemin préconfiguré noeud à noeud ne recevant pas le message de suivi de chemin dans une période de temps prédéterminée si une période de temps prédéterminée est définie.

21. Procédé selon la revendication 16, dans lequel le procédé comprend en outre :
l'acheminement uniquement du trafic TE reçu sur des ports d'entrée d'un noeud jusqu'à un premier moteur de commutation ; et
l'acheminement uniquement du trafic traditionnel reçu sur des ports d'entrée d'un noeud jusqu'à un second moteur de commutation.
